# EUROPÄISCHE PATENTSCHRIFT

(11) **EP 2 190 917 B1**
(45) Veröffentlichungstag und Bekanntmachung des Hinweises auf die Patenterteilung: **22.08.2018**
(21) Anmeldenummer: 08782851.3
(22) Anmeldetag: 12.09.2008
(51) Int. Cl.: C08L 1/02, C08B 16/00, D01F 2/06

(54) **CELLULOSESUSPENSION UND VERFAHREN ZU DEREN HERSTELLUNG**
CELLULOSE SUSPENSION AND METHOD FOR THE PRODUCTION THEREOF
SUSPENSION DE CELLULOSE ET SON PROCÉDÉ DE PRÉPARATION

(30) Priorität: 21.09.2007 AT 14972007
(43) Veröffentlichungstag der Anmeldung: 02.06.2010
(73) Patentinhaber: Lenzing AG, 4860 Lenzing (AT)
(72) Erfinder: INNERLOHINGER, Josef, A-4880 Berg i.A. (AT); FIRGO, Heinrich, A-4840 Vöcklabruck (AT); SCHKORWAGA, Helmut, A-4864 Attersee (AT)
(74) Vertreter: Hanemann, Otto
(86) Internationale Anmeldenummer: PCT/AT2008/000323
(87) Internationale Veröffentlichungsnummer: WO 2009/036479

(56) Entgegenhaltungen:
- EP-A- 0 824 105
- WO-A-99/36603
- WO-A-99/36604
- WO-A-02/057319

## Beschreibung

Die vorliegende Erfindung betrifft cellulosische Partikel, eine Suspension cellulosischer Partikel sowie ein Verfahren zur Herstellung einer Suspension cellulosischer Partikel, wobei das cellulosische Material zwischen dem Auflösen der Cellulose und der Zerkleinerung der suspendierten Cellulosefasern niemals getrocknet wird.

Trockene Cellulosepulver sind kommerziell in den unterschiedlichsten Größen erhältlich und in einer Vielzahl von Anwendungen zu finden, wie zum Beispiel als Filterhilfsmittel, Zusatz- und Hilfsstoffe in Lebensmitteln und Pharmazeutika, Chromatographiematerial oder auch als Additiv in der Baustoffindustrie. Der Großteil entfällt dabei auf faserige Cellulose-I-Pulver, die aus Zellstoff, Holz oder Einjahrespflanzen gewonnen werden. Die Untergrenze der Faserlänge dieser fasrigen Cellulosepulver ist hierbei auf 10-20µm limitiert. Nach oben hin finden auch Faserlängen im mm-Bereich Anwendung, wobei hier schon eine Überschneidung zu Kurzschnittfasern besteht.
In geringer Anzahl sind auch Cellulose-II-Pulver zu finden, wobei hier neben faserigen auch sphärische Pulver vorkommen. Diese Pulver werden hauptsächlich durch Ausfällen von aufgelöster Cellulose in geeigneten Fällungsmitteln hergestellt. Sphärische Cellulosepulver im Größenbereich unterhalb 10µm sind nur mit größerem Aufwand herstellbar und daher schwer am Markt zu finden.

Beispielsweise beschreibt die WO 02/57319 die Herstellung von Celluloseperlen mittels des NMMO-Verfahrens, wobei der Celluloselösung vor dem Verformen verschiedene Zusatzstoffe in größeren Mengen, beispielsweise Titandioxid oder Bariumsulfat sowie als lonentauscher wirkende Materialien zugegeben werden. Die erhaltenen Produkte können als lonentauscher oder Katalysatoren eingesetzt werden.

Die Herstellung eines als lonentauschermaterial beispielsweise zur Abwasserreinigung geeigneten Titanoxides wird in US 6,919,029 beschrieben. Besonders hohe Absorptionskapazitäten und -geschwindigkeiten werden bei diesem Material dadurch erreicht, dass das Titanoxidmaterial durch eine spezielle Behandlung an der Oberfläche aktiviert wird. Dieses Titanoxidmaterial kann als "unterstöchiometrisches Titandioxid" bezeichnet werden. Das bedeutet, dass das Verhältnis der Sauerstoffatome zu den Titanatomen im Material kleiner als 2 ist. Zur näheren Beschreibung dieser Oberflächenaktivierung wird auf die Beschreibung in der US 6,919,029 verwiesen.

Weitere Möglichkeiten zur Herstellung von besonders funktionalisierten Titanoxiden bestehen im sogenannten "Dotieren" von Titandioxid mit Eisen- und Schwefel-Atomen. Diese Verbindungen weisen eine photokatalytische Aktivität auf.

Cellulosische Materialen im nm-Bereich finden in letzter Zeit ebenfalls verstärkt Beachtung. Dabei kann man zwischen den starren kristallinen Whiskers (De Souza Lima, M.M. and R. Borsali, Macromolecular Rapid Communications, 2004. 25: p. 771-787) und der flexiblen MFC (Microfibrillated Cellulose) (Herrick, F.W., et al., Journal of Applied Polymer Science: Applied Polymer Symposium, 1983. 37: p. 797-813) bzw. (Turbak, A.F., F.W. Snyder, and K.R. Sandberg, Journal of Applied Polymer Science: Applied Polymer Symposium, 1983. 37: p. 815-827) unterscheiden. Beide Partikelarten sind im Größenbereich kleiner bzw. um 1µm angesiedelt und liegen aufgrund ihrer Herstellungsverfahren als Suspensionen bzw. Gele mit nur geringem Cellulosegehalt vor. Die Herstellung erfolgt großteils durch einen oder mehrere mechanische Desintegrationsschritte (Ultraschall, Homogenisator,...) in Kombination mit einem starken Abbau des cellulosischen Ausgangsmaterials durch Enzyme oder starke Säuren.

Ebenfalls in der Literatur beschrieben sind Cryoverfahren mit Hilfe von flüssigem Stickstoff zur Freilegung der Microfibrillen aus cellulosischen Materialien (Chakraborty, A., M. Sain, and M. Kortschot, Holzforschung, 2005. 59: p. 102-107).

Eine alternative Methode zur Herstellung von Cellulose-Nanofasern ist das Elektrospinnverfahren (Kulpinski, P., Journal of Applied Polymer Science, 2005. 98(4): p. 1855-1859), das allerdings auch erheblichen Aufwandes bedarf.

Der Hauptanwendungsbereich dieser nanostrukturierten Materialien ist zurzeit vor allem die Verstärkung von Verbundmaterialien (Favier, V., H. Chanzy, and J.Y. Cavaillé, Macromolecules, 1999. 28: p. 6365-6357).

Als weitere spezielle Anwendung der oben beschriebenen Cellulose Partikel sind in der Literatur auch Filme bzw. Membranen beschrieben. Oft werden die cellulosischen Materialien dabei aber im Verbund mit anderen Substanzen eingesetzt und/oder die Herstellung der Filme ist mit erheblichem Aufwand verbunden. Beispiele sind zu finden in (Fendler, A., et al., Characterization of barrier properties of composites of HDPE and purified cellulose fibers. Cellulose, 2007. in press. doi: 10.1007/s10570-007-9136-x), (Liu, H. and Y.-L. Hsieh, Ultrafine Fibrous Cellulose Membranes from Electrospinning of Cellulose Acetate. Journal of Polymer Science: Part B: Polymer Physics, 2002. 40: p. 2119-2129.) oder (Sanchez-Garcia, M.D., E. Gimenez, and J.M. Lagaron, Morphology and barrier properties of solvent cast composites of thermoplastic biopolymers and purified cellulose fibers. Carbohydrate Polymers, 2007. in press. doi: 10.1016/j.carbpol.2007.05.041).

Gegenüber dem bekannten Stand der Technik bestand die Aufgabe der vorliegenden Erfindung daher darin, Cellulose-Fibride herzustellen, die die Lücke in der verfügbaren Teilchengröße zwischen den in einem Suspensionsmedium suspendierten Nanomaterialien wie beispielsweise Whiskers oder MFC in der Größenordnung kleiner als 1µm und den konventionellen trockenen Pulvern in der Größenordung zwischen 10µm bis einigen mm schließen und dabei eine verbesserte Wirtschaftlichkeit aufweisen.

Weiters sollte sich das Herstellungsverfahren durch einfache Durchführung auszeichnen und bevorzugt auf starken Abbau des cellulosischen Materials durch enzymatische oder chemische Behandlung (v. a. starke Säuren) des Ausgangsmaterials verzichten, da dies eine aufwendige Reinigung des Produkts nach sich zieht. Auch sollten höher konzentrierte (-10% Festsubstanz) Suspensionen der hergestellten Fibride herstellbar sein, die sich noch gut verarbeiten lassen.

Diese Aufgabe konnte gelöst werden durch ein Verfahren zur Herstellung einer Suspension cellulosischer Partikel mit folgenden Schritten:
- Auflösen von Cellulose, um eine cellulosehaltige Spinnlösung zu erhalten,
- Extrudieren der cellulosehaltigen Lösung,
- Ausfällen der Cellulose, wobei Cellulosefaserkabel erhalten werden,
- Schneiden der ausgefällten Cellulosefaserkabel auf eine Stapellänge von 2 - 60 mm,
- Suspendieren der geschnittenen Cellulosefasern und
- Zerkleinerung der suspendierten Cellulosefasern,
wobei das cellulosische Material zwischen dem Auflösen der Cellulose und der Zerkleinerung der suspendierten Cellulosefasern niemals getrocknet wird.

Mit diesem Verfahren lassen sich mit einer gegenüber dem Stand der Technik verringerten Anzahl an Verfahrensschritten, kürzerer Gesamtverweilzeit im Verfahren und verringertem Energieaufwand cellulosische Partikel mit hervorragenden Eigenschaften herstellen.

Bevorzugt weist das cellulosische Material stets eine Feuchte von mindestens 50 %, bevorzugt von mindestens 100 % und besonders bevorzugt von mindestens 150% auf. Daher ist darauf zu achten, dass die Cellulose auch während der Weiterverarbeitung, insbesondere während der Zerkleinerung und den dazwischen liegenden Verfahrensschritten nie austrocknet, also stets genügend wässerige Phase vorhanden ist.

Im Vergleich zum Stand der Technik können mit dem erfindungsgemäßen Verfahren Cellulosepartikel und Suspensionen, die diese Partikel enthalten, hergestellt werden, die vergleichbare Eigenschaften und Anwendungsbereiche wie die bekannten kleineren Nanopartikel aufweisen, aber bedeutend kostengünstiger herzustellen sind. Ein zusätzlicher wirtschaftlicher Vorteil besteht darin, dass die erfindungsgemäß hergestellten Suspensionen deutlich höhere Cellulosegehalte aufweisen können, nämlich bis zu 20 Gew.% anstelle von nur ca. 2 Gew.% wie im Falle der Nanomaterialien. Dadurch sinken die Verpackungs- und Transportkosten und auch die Verwendung der Suspensionen wird günstiger, da beispielsweise weniger Suspensionsmedium entfernt werden muss, um einen Film aus den Cellulosepartikeln zu erhalten.

Die Herstellung von Cellulosefasern auf Basis der Lyocell-Technologie ist bekannt und Stand der Technik. Grundlegend zur erfindungsgemäßen Erzeugung von Fibriden aus Fasern ist dabei jedoch, dass die Fasern während des Prozesses nicht getrocknet werden und stets einen entsprechend hohen Feuchtigkeitsgehalt (mindestens 50 %, bevorzugt mindestens 100 % und besonders bevorzugt mindestens 150%) aufweisen.

Das bekannteste und bereits in kommerziellem Maßstab eingesetzte Lösungsmittel in der Lyocell-Technologie ist wässriges N-Methylmorpholin-N-Oxid (NMMO). Aber auch weitere bekannte Lösungsmittel, in denen die Cellulose ohne chemische Derivatisierung physikalisch gelöst wird, sind zur Herstellung von cellulosischen Fasern gemäß der vorliegenden Erfindung geeignet und wirtschaftlich. Insbesondere soll hier das Auflösen in sogenannten "ionischen Flüssigkeiten" (lonic Liquids) oder in anderen aminoxidhaltigen Lösungsmitteln genannt werden. Ebenso sind auch die bekannten Viskose-Verfahren zur Umsetzung der vorliegenden Erfindung geeignet und wirtschaftlich, in denen die Cellulose zunächst in natronlaugehaltigem Medium xanthogeniert und dabei aufgelöst wird, die dabei erzeugte cellulosehaltige Spinnlösung extrudiert und anschließend im Fällbad ausgefällt und regeneriert wird.

Auf die feuchten Fasern können Hilfsstoffe (z. B. Stearinsäure-PEG-Ester, teilsulfatierte Fettalkohole, Fettalkylethophosphat) aufgebracht sein, die die Weiterverarbeitung erleichtern, beispielsweise durch Verbesserung der Mahlfähigkeit.

Die feuchten Faserkabel werden mit herkömmlichen Mitteln auf eine Stapellänge von 2-60mm geschnitten. Ausgehend von diesen initialfeuchten (Kurzschnitt)-Fasern erfolgt die weitere Verarbeitung. Bereits bei der Herstellung der Fasern lassen sich die Eigenschaften der am Ende erhaltenen Fibride zum Teil bestimmen. Dafür sind beispielsweise die dem Fachmann bekannten Maßnahmen geeignet, die zu einer Beeinflussung von Fasertiter Faserfestigkeit, Dehnung oder Schlingenfestigkeit führen würden, wenn herkömmliche textile Fasern hergestellt werden würden. Solche Maßnahmen sind unter anderem eine entsprechende Auswahl des Zellstoffs bzw. der Spinnbedingungen. Während sich der Fasertiter insbesondere auf die Partikelgröße auswirkt, lässt sich über die Faserfestigkeit deren Sprödigkeit und Fibrillierneigung beeinflussen. Sprödere bzw. leichter fibrillierende Fasern lassen sich besser mahlen, da die Mahldauer verkürzt wird, weniger Energie zum Mahlen aufgewendet werden muß und auch die thermische Belastung der Partikel beim Mahlen verringert wird.

Zunächst werden die Fasern in Wasser oder einem geeigneten anderen Medium suspendiert, wobei diese Suspension homogen und fließ- bzw. pumpfähig sein soll. Ein Fasergehalt im Bereich von 4-6% atro, d.h. bezogen auf absolut trockene Cellulose, hat sich dabei als am besten geeignet erwiesen. Die Suspendierung erfolgt mittels geeigneter mechanischer Aggregate, wobei zusätzlich auch eine Fibrillation der Fasern eintreten kann. Eine Fibrillation, also das Ablösen einzelner Fibrillen von der Faseroberfläche, führt wegen der so entstehenden feinen Bruchstücke zu einem höheren Anteil an kleineren Cellulosepartikeln in der Suspension. Ein solcher Feinkornanteil kann je nach angestrebten Eigenschaften des Endprodukts erwünscht oder unerwünscht sein. Daher muss das Suspendieraggregat entsprechend ausgewählt werden.

Für die weiteren Verfahrensschritte sind mehrere Varianten möglich:
In einer ersten Variante werden die Fasern zunächst nur suspendiert, wobei ihre Größe weitgehend unverändert erhalten bleibt. Anschließend werden sie in einem Zerkleinerungsschritt auf die gewünschte Endgröße zerkleinert.

In einer zweiten Variante werden die Fasern bereits beim Suspendieren gleichzeitig auf zerkleinert und in einem anschließenden Zerkleinerungsschritt weiter auf die gewünschte Endgröße zerkleinert.

In einer dritten Variante werden die Fasern bereits beim Suspendieren gleichzeitig auf die gewünschte Endgröße zerkleinert.

In einer vierten Variante ist es möglich, die Fasern nach dem Schneiden vom Wasser abzutrennen und diese feuchten Fasern ohne umgebende Flüssigkeit zunächst ein einer Schneidmühle, einer Hochkonsistenzmühle oder einem Schredder zu zerkleinern und anschließend zu suspendieren und auf die gewünschte Endgröße zu zerkleinern.

Generell lässt sich sagen, dass die meisten Geräte, die in der Zellstoffzerkleinerung bzw. Aufarbeitung eingesetzt werden, auch zur Herstellung einer Fasersuspension entsprechend dieser Erfindung geeignet sind. Als geeignet zur Suspendierung der Fasern haben sich unter anderem folgende Geräte herausgestellt: Ultra Turax mit Schneidkopf, Jokro-Mühle, Valley Beater und Refiner.

In einer bevorzugten Ausführungsform des erfindungsgemäßen Verfahrens werden die Fasern bereits beim Suspendieren gleichzeitig zerkleinert. Hierfür sind besonders solche Suspendieraggregate geeignet, die die Fasern beim Suspendieren gleichzeitig auf eine Länge im Bereich zwischen 100µm und 600µm zerkleinern. Diese Länge ist für eine weitere Zerkleinerung besonders geeignet.

In einer weiteren bevorzugten Ausführungsform des erfindungsgemäßen Verfahrens erfolgt nach dem Suspendieren eine Zerkleinerung auf eine Partikelgröße von 1 bis 5 µm. Die Zerkleinerung ist bevorzugt eine Nassmahlung.

Die Zerkleinerung wird bevorzugt mit einem Cellulosegehalt zwischen 0,1 und 5,0 Gew.% in der Suspension durchgeführt. Bei geringeren Cellulosegehalten werden, bezogen auf die Menge der Cellulosepartikel, zu große Mühlen benötigt und außerdem muss nach der Zerkleinerung eine zu große Menge des Suspensionsmediums entfernt werden. Wenn der Cellulosegehalt zu hoch ist, wird die Viskosität der Suspension zu hoch und durch die Mahlbewegung wird zu viel Scherenergie eingebracht.

Auch hier ist es wieder möglich, Additive - zur Unterstützung der Zerkleinerung bzw. zur Stabilisierung der Fibride im umgebenden Medium - zuzusetzen. Die Nassvermahlung erfolgt in Mühlen, mit denen die gewünschte Endfeinheit (1-5µm) erreichbar ist. Dabei handelt es sich bevorzugt um unterschiedliche Rührwerkskugelmühlen (Scheibenrührwerk, Stiftrührwerk,...). Eingeschränkt können auch andere Mühlen wie (Doppel-)Konusmühlen verwendet werden.

Um die gewünschten Partikeleigenschaften, insbesondere die Endfeinheit zu erreichen, ist es im allgemeinen notwendig, die Suspension während der Nassmahlung im Kreislauf zu führen, so dass das Mahlgut die Mühle mehrmals passieren kann. Die Feinheit lässt sich somit über die Mahldauer steuern, aber auch über andere Parameter ist eine Beeinflussung der Partikelgröße möglich. So können die Größe der Mahlkörper oder die Drehzahl der Mühle angepasst werden.

Im Anschluss an die Mahlung ist noch eine Klassierung der Fibride mittels Nassklassierer, beispielsweise vom Typ Hosokawa-Alpine Hydroplex möglich, wenn eine sehr enge Verteilung gewünscht wird.

Am Ende der Mahlung liegen die Fibride mit einer Länge von 1-5µm und einem Durchmesser von 100-500nm in einer Konzentration von 0,1-5 Gew. % im suspendierenden Medium vor. Dabei sind sowohl einzelne Fibride als auch zusammenhängende Fibrid-Verbände zu finden. Die Fibride sedimentieren in Abhängigkeit von ihrer Größe und der Art der Stabilisierung.

Zur Stabilisierung der Suspension, falls diese gewünscht wird, dienen bevorzugt Maßnahmen, die eine Verdickung der Suspension bewirken. Dies kann entweder durch das Entfernen eines kleinen Teils des Suspensionsmediums, beispielsweise durch Zentrifugieren, Eindampfen bei schonenden Temperaturen oder Membrantrennverfahren oder durch die Zugabe von Verdickungsmitteln erfolgen. Geeignete Verdickungsmittel sind dem Fachmann bekannt, beispielsweise handelsübliche Carboxymethylcellulose oder Glycerin. Grundsätzlich wäre auch der Einsatz von Dispergiermitteln oder Tensiden bzw. oberflächenaktiven Substanzen zur Stabilisierung der Suspension möglich. Dies ist jedoch nicht bevorzugt, da dadurch im Gegensatz zu den polymeren oder polymerartigen Verdickungsmitteln eine andere Substanzklasse in die Suspension eingebracht wird.

Aber auch wenn die erfindungsgemäßen Cellulosepartikel in der Suspension sedimentieren, kommt es im Allgemeinen zu keiner Aggregation und der Fibrid-Niederschlag lässt sich leicht wieder aufschütteln. Durch dieses Sedimentieren in Verbindung mit Dekantieren des Überstandes lassen sich die Suspensionen auch aufkonzentrieren. Weitere Methoden zur Erhöhung der Feststoffkonzentration sind Zentrifugieren und Abdampfen der flüssigen Phase. Dabei ist jedoch darauf zu achten, dass die Suspensionen nicht zu sehr eingedickt werden, da es sonst doch noch zur irreversiblen Aggregation der Fibride kommt. Die Obergrenze des Feststoffgehalts in der Suspension ist von der Fibridgröße abhängig und liegt für Fibride in der Größe von einigen µm bei etwa 15-20% Trockensubstanz in der Suspension.

Aus der erfindungsgemäßen Suspension können die Partikel durch Sprühtrocknen erhalten werden. Verfahren und Vorrichtungen zum Sprühtrocknen sind dem Fachmann zwar grundsätzlich bekannt. Überraschend ist jedoch, dass sich die erfindungsgemäßen Suspensionen mit ungewöhnlich hohen Partikelgehalten noch problemlos versprühen lassen. Suspensionen mit Partikeln aus dem Stand der Technik sind bereits bei Gehalten von maximal 2 Gew.% nicht mehr gut versprühbar, da sie hohe Viskositäten und vor allem ein nicht-Newtonsches Fließverhalten aufweisen, das in den Sprühkanälen problematisch ist.

Bei der Sprühtrocknung bleiben die Einzelfibride zwar erhalten, verlieren aber charakteristische Eigenschaften. Die Sprühtrocknung wäre jedoch interessant, um feinste faserige Cellulosepulver zu erhalten, welche über Trockenmahlung nicht zugänglich sind.

Erfindungsgemäß können im Verfahren Zusatzstoffe zugefügt werden, die auf oder in dem cellulosischen Partikel verbleiben. Damit können den Partikeln zusätzliche funktionelle Eigenschaften verliehen werden, wobei überraschenderweise die guten Verarbeitungseigenschaften der Suspension erhalten bleiben. Diese Zusatzstoffe werden während der erfindungsgemäßen Behandlung im feuchten Zustand, wie z. B. beim Auswaschen, Suspendieren und Zerkleinern nicht entfernt, sondern verbleiben in den Cellulosepartikeln. Die Zusatzstoffe können in einer Menge zwischen 1 und 200 Gew.% bezogen auf die Cellulosemenge auf oder in dem Partikel enthalten sein.

Diese Zusatzstoffe können bereits zur cellulosehaltigen Spinnlösung hinzugefügt werden, bevor sie ausgefällt wird. Sie können beispielsweise ausgewählt sein aus der Gruppe, umfassend Pigmente, anorganische Substanzen wie beispielsweise Titanoxide, insbesondere unterstöchiometrisches Titandioxid, Bariumsulfat, Ionenaustauscher, Polyethylen, Polypropylen, Polyester, Aktivkohle, Ruß, Zeolithe, polymere Superabsorber und Flammschutzmittel.

Ebenso können Zusatzstoffe auf die ausgefällten Cellulosefasern vor oder nach dem Schneiden aufgegeben werden. Geeignete Vorrichtungen hierfür sind dem Fachmann bekannt.

Zusatzstoffe können auch vor, während oder nach dem Zerkleinerungsvorgang in der erfindungsgemäßen Suspension zugegeben werden. In diesem Fall sind sie hauptsächlich an der Oberfläche bzw. in den äußeren Schichten der cellulosischen Partikel verteilt. In diesem Fall kann es sich bei den Zusatzstoffen beispielsweise um Avivagen, Farbstoffe oder Cyclodextrine handeln. Damit werden entweder die Verarbeitungseigenschaften im erfindungsgemäßen Verfahren oder danach oder funktionelle Eigenschaften der Partikel wie beispielsweise erhöhte Absorptionsfähigkeit für bestimmte Substanzen beeinflusst.

Gegenstand der vorliegenden Erfindung ist auch eine Suspension, enthaltend 0,01 bis 20 Gew. %, bevorzugt 0,1 bis 10 Gew. % erfindungsgemäß hergestellte cellulosische Partikel, wobei die cellulosischen Partikel während ihrer Herstellung niemals getrocknet wurden und eine Partikelgröße von 1 bis 5 µm aufweisen. Sie bilden beim Eintrocknen aus der Muttersuspension einen mit bloßem Auge oder im Elektronenmikroskop erkennbar homogenen Film. Die Herstellung dieser Suspension kann nach dem oben beschriebenen erfindungsgemäßen Verfahren erfolgen. Bisher konnte keine physikalische Charakterisierungsmethode gefunden werden, die die einzigartigen Eigenschaften dieser Suspension und der in ihr enthaltenen Partikel erfasst. Die erfindungsgemäße Suspension kann jedoch eindeutig am hier beschriebenen Filmbildungsverhalten erkannt werden, das für eine aus cellulosischen Partikeln bestehende Suspension einzigartig ist. Bisher bekannte cellulosische Partikel bilden homogene Filme nur unter gezielter Anwendung erhöhter Temperaturen, Drücke oder zusätzlicher Lösungsmittel aus (siehe beispielsweise Endo et al., Polymer Journal (32) 2, 182-185 (2000).

Grundlegende Charakteristik der beschriebenen Fibide ist, dass sie aus einer Celluloselösung gewonnen werden und während des gesamten Herstellungsprozesses stets ausreichend feucht sind. Es handelt sich also um sogenannte niemals getrocknete Partikel. Es haben sich noch keine irreversiblen Wasserstoffbrücken zwischen den OH-Gruppen der Cellulosemoleküle ausgebildet. Deshalb neigen die beschriebenen Suspensionen beim Eintrocknen zur Bildung eines homogenen, dichten Films, da die OH-Gruppen sich noch frei arrangieren können.

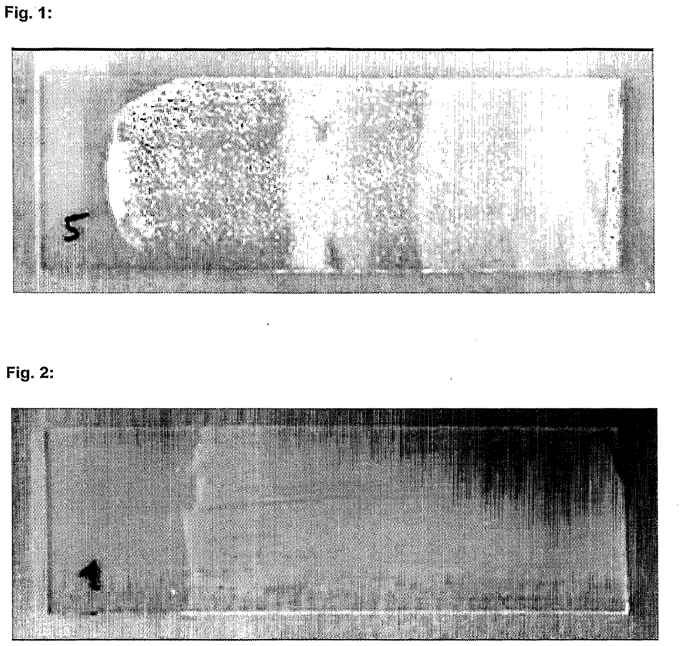

Fig.1 zeigt einen Film, der aus handelsüblichem, trockenem Cellulosepulver durch Suspendieren, Aufstreichen der Suspension auf einen Objektträger aus Glas und anschließendes Trocknen hergestellt wurde. Der Film ist sehr grobkörnig und inhomogen, wie bereits mit bloßem Auge erkennbar ist.
Fig. 2 zeigt einen Film, der durch Aufstreichen einer erfindungsgemäßen Suspension auf einen Objektträger aus Glas und anschließendes Trocknen hergestellt wurde. Dieser Film ist sehr homogen, wie mit bloßem Auge erkannt werden kann.

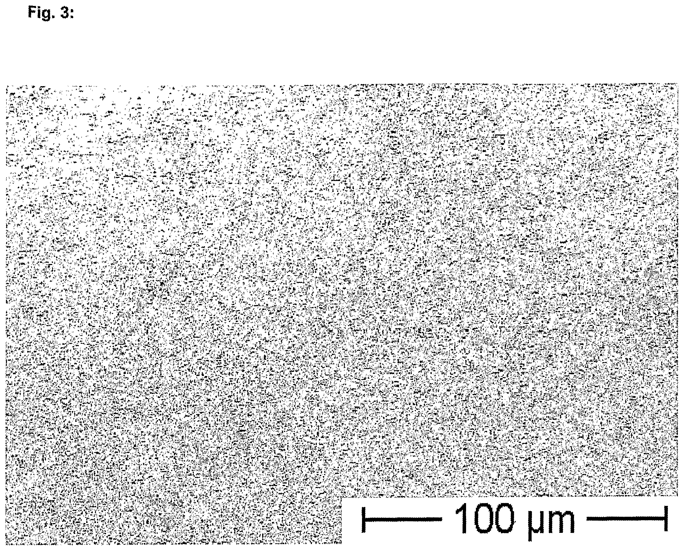

Fig. 3 zeigt den gleichen, aus der erfindungsgemäßen Suspension hergestellten Film aus Fig. 2 unter dem Elektronenmikroskop. Auch bei dieser Vergrößerung ist zu erkennen, dass der Film sehr homogen ist.

Trocknet man die Fibride, bringt sie anschließend erneut in Suspension und trocknet sie dann wieder ein, so ergibt sich zwar auch ein Film, dar allerdings nicht so homogen, sondern deutlich grobkörniger ist und stärker zur Rissbildung neigt. Die eingetrockneten Fibride verhalten sich so wie handelsübliche trockene Cellulosepulver, wenn man sie zur Filmbildung aus Suspension heranzieht.

Gegenstand der vorliegenden Erfindung sind auch nach dem oben beschriebenen erfindungsgemäßen Verfahren hergestellte cellulosische Partikel mit einem Wassergehalt von 80 bis 99,9 Gew.%, dadurch gekennzeichnet, dass sie während ihrer Herstellung niemals getrocknet wurden und eine Partikelgröße von 1 bis 5 µm aufweisen. Sie bilden beim Eintrocknen aus der Muttersuspension einen mit bloßem Auge oder im Elektronenmikroskop erkennbar homogenen Film.

Die hier beschriebenen Partikel können, wie oben bereits beschrieben, einen großen Anteil an Zusatzstoffen enthält. Die Zusatzstoffe können in einer Menge zwischen 1 und 200 Gew.% bezogen auf die Cellulosemenge in den Partikeln enthalten sein, wobei sie entweder im gesamten Partikel oder hauptsächlich bzw. vollständig an dessen Oberfläche bzw. in den äußeren Schichten verteilt sein können.

Gegenstand der vorliegenden Erfindung ist auch eine Verwendung der cellulosischen Partikel mit einem Wassergehalt von 80 bis 99,9 Gew.%, die nach dem oben beschriebenen Verfahren hergestellt werden können, zur Herstellung homogener Filme.

Ein Vorteil der Verwendung der erfindungsgemäßen Fibride zur Filmbildung im Vergleich zu den oben beschriebenen Verfahren aus dem Stand der Technik ist die sehr einfache Durchführung. Die Filmherstellung geschieht einfach durch schonendes Eintrocknen der Fibridsuspension. Zusätzlich kann bei der Filmbildung auch Druck und Temperatur angewendet werden. Eine höhere Temperatur beschleunigt vor allem die Eintrocknung.

Dies wird beispielsweise durch Anblasen mit erhitztem Gas, Strahlungswärme oder direkten Kontakt mit erhitzten Oberflächen erfolgen. Die Anwendung eines höheren Druckes ergibt insbesondere einen dichteren Film und wird beispielsweise durch Pressen zwischen Flächen oder Walzen erreicht.

Im Folgenden werden bevorzugte Ausführungsformen der Erfindung anhand von Beispielen beschrieben. Die Erfindung ist jedoch nicht auf diese Ausführungsformen beschränkt, sondern umfasst auch alle anderen Ausführungsformen, die auf dem gleichen erfinderischen Konzept beruhen.

Die Bestimmung der Partikelgröße erfolgte mit einem Laserbeugungsmessgerät.

### Beispiel 1

Nach einem an sich bekannten Verfahren unter Verwendung von NMMO wurden 6mm lange Lyocellfasern mit einem Einzelfasertiter von 1,3dtex hergestellt. Dabei wurde die Spinnlösung in einem Trocken-Nass-Spinnverfahren zunächst durch einen Luftspalt in ein Fällbad extrudiert, die gebildeten Gelfäden aus dem Fällbad abgezogen und nach einer Waschstufe in nassem Zustand geschnitten. Nach dem Schneiden wurden die in Wasser suspendierten Fasern in einem Valley Beater (Lorentzen & Wettre) vermahlen. Die Suspension enthielt dabei 2,5% Cellulose und die Mahldauer betrug 150 min. Die zweite Mahlung erfolgte in einer Rührwerkskugelmühle des Herstellers Drais-Werke mit 1000 ml Mahlraumvolumen und mit Zirkonoxidkugeln mit 0,9-1,1mm Durchmesser zunächst drei Stunden lang bei 2000 rpm und anschließend noch eine Stunde lang bei 3000 rpm. Die so erhaltene Suspension wurde anschließend für 15 Stunden bei 60°C im Trockenschrank auf 7% Cellulose eingedickt. Die Suspension war dickflüssig und es kam auch bei längerem Stehen zu keiner Phasenseparation. Die Suspension ließ sich problemlos wieder mit Wasser auf einen niederen Cellulosegehalt verdünnen. Durch Eindicken (und Verdünnen) der Suspension kam es zu keiner merklichen (irreversiblen) Aggregation der Fibride. Die Länge der Fibride lag im Bereich 1-8µm (Laserbeugung, Mikroskopie).

### Beispiel 2

8g der geschnittenen, feuchten Fasern (Cellulosegehalt 30% atro) aus Beispiel 1 (6mm, 1,3dtex) wurden mit einem Glasstab in 60ml Wasser eingerührt. Diese Suspension wurde zusammen mit 300g Zirkonoxidkugeln (1,1-1,4mm Durchmesser) in ein Edelstahlbecherglas geleert. Mit einem Scheibenrührwerk (IKA RE166) wurde die Suspension 2 Stunden lang mit 3000 rpm gemahlen. Die Fibridsuspension wurde mittels Sieb von den Mahlkugeln abgetrennt. Die Fibride waren länger als jene in Beispiel 1. Es waren zwar auch Fibride mit 1 µm Länge vorhanden, jedoch lag der Mittelwert der Länge bei etwa 10µm und es waren Fibride mit bis zu 40µm Länge zu finden.

### Beispiel 3

15g nicht avivierte, nicht getrocknete Viskosefasern (1,3dtex, 38mm Schnittlänge) aus einer kommerziellen Produktionsanlage mit einem Cellulosegehalt von 35% (atro) wurden in einem Labormixer mit Sternmesser vorzerkleinert und aufgefasert. Von der auf diese Weise vorbehandelten Probe wurden 2g Fasern durch Rühren mit einem Glasstab in 80ml Wasser dispergiert. Diese Suspension wurde mit 300g Zirkonoxidkugeln (0,9-1,1 mm Durchmesser) in einem Edelstahlbecherglas vermischt und anschließend mit einen Scheibenrührwerk (IKA RE166) bei 3000 rpm 3 Stunden lang gemahlen. Die Abtrennung der Mahlkugeln von der Fibridsuspension erfolgte mittels Sieb. Die erhaltenen Fibride waren von vergleichbarer Größe wie jene aus Beispiel 1 mit Längen im Bereich 2-12µm (Laserbeugung).

## Patentansprüche

1. Verfahren zur Herstellung einer Suspension cellulosischer Partikel durch Auflösen von Cellulose, um eine cellulosehaltige Spinnlösung zu erhalten, Extrudieren der cellulosehaltigen Lösung, Ausfällen der Cellulose, wobei Cellulosefaserkabel erhalten werden, Schneiden der ausgefällten Cellulosefaserkabel auf eine Stapellänge von 2 - 60 mm, Suspendieren der geschnittenen Cellulosefasern und Zerkleinerung der suspendierten Cellulosefasern, **gekennzeichnet dadurch, dass** das cellulosische Material zwischen dem Auflösen der Cellulose und der Zerkleinerung der suspendierten Cellulosefasern niemals getrocknet wird.

2. Verfahren gemäß Anspruch 1, wobei das cellulosische Material stets eine Feuchte von mindestens 50 %, bevorzugt von mindestens 100 % und besonders bevorzugt von mindestens 150 % aufweist.

3. Verfahren gemäß Anspruch 1 oder 2, wobei die Fasern beim Suspendieren gleichzeitig zerkleinert werden.

4. Verfahren gemäß Anspruch 3, wobei die Fasern beim Suspendieren gleichzeitig auf eine Länge im Bereich zwischen 100µm und 600µm zerkleinert werden

5. Verfahren gemäß einem der vorhergehenden Ansprüche, wobei nach dem Suspendieren eine Zerkleinerung, bevorzugt eine Nassmahlung auf eine Partikelgröße von 1 bis 5 µm erfolgt.

6. Verfahren gemäß Anspruch 1, wobei die Suspension während der Nassmahlung im Kreislauf geführt wird.

7. Verfahren gemäß Anspruch 1, wobei die Fasern nach der Zerkleinerung in einem Nassklassierer klassiert werden.

8. Verfahren gemäß Anspruch 1, wobei die Zerkleinerungen mit einem Cellulosegehalt zwischen 0,1 und 5,0 Gew.% in der Suspension durchgeführt werden.

9. Verfahren gemäß Anspruch 1, in dem Zusatzstoffe zugefügt werden, die auf oder in dem cellulosischen Partikel verbleiben.

10. Verfahren gemäß Anspruch 1, wobei der Celluloselösung vor dem Ausfällen 1 bis 200 Gew.% Zusatzstoffe, bezogen auf die Cellulosemenge, ausgewählt aus der Gruppe, umfassend Pigmente, Titanoxide, insbesondere unterstöchiometrisches Titandioxid, Bariumsulfat, Ionenaustauscher, Polyethylen, Polypropylen, Polyester, Aktivkohle, polymere Superabsorber und Flammschutzmittel zugegeben werden.

11. Suspension, enthaltend 0,01 bis 20 Gew. %, bevorzugt 0,1 bis 10 Gew. % cellulosische Partikel, die nach einem Verfahren gemäß Anspruch 1 hergestellt wurden, **dadurch gekennzeichnet, dass** die cellulosischen Partikel während ihrer Herstellung niemals getrocknet wurden, eine Partikelgröße von 1 bis 5 µm aufweisen und beim Eintrocknen aus der Muttersuspension einen mit bloßem Auge oder im Elektronenmikroskop erkennbar homogenen Film bilden.

12. Suspension gemäß Anspruch 11, wobei die in der Suspension enthaltenen cellulosischen Partikel 1 bis 200 Gew.%, bezogen auf die Cellulosemenge, inkorporierte Zusatzstoffe, ausgewählt aus der Gruppe, umfassend Pigmente, Titanoxide, insbesondere unterstöchiometrisches Titandioxid, Bariumsulfat, Ionenaustauscher, Polyethylen, Polypropylen, Polyester, Aktivkohle, polymere Superabsorber und Flammschutzmittel enthalten.

13. Cellulosische Partikel, die nach einem Verfahren gemäß Anspruch 1 hergestellt wurden, mit einem Wassergehalt von 80 bis 99,9 Gew.%, **dadurch gekennzeichnet, dass** sie während ihrer Herstellung niemals getrocknet wurden, eine Partikelgröße von 1 bis 5 µm aufweisen und beim Eintrocknen aus der Muttersuspension einen mit bloßem Auge oder im Elektronenmikroskop erkennbar homogenen Film bilden.

14. Partikel gemäß Anspruch 14, wobei die Partikel 1 bis 200 Gew.%, bezogen auf die Cellulosemenge, inkorporierte Zusatzstoffe, ausgewählt aus der Gruppe, umfassend Pigmente, Titanoxide, insbesondere unterstöchiometrisches Titandioxid, Bariumsulfat, Ionenaustauscher, Polyethylen, Polypropylen, Polyester, Aktivkohle, polymere Superabsorber und Flammschutzmittel enthalten.

## Claims

1. A method for preparing a suspension of cellulosic particles by dissolving cellulose to obtain a cellulose-containing spinning solution, extruding the cellulose-containing solution, precipitating the cellulose, whereby cellulose tow is obtained, cutting the precipitated cellulose tow to a staple length of 2 - 60 cm, suspending the cut cellulose fibers, and comminuting the suspended cellulose fibers, **characterized in that** the cellulosic material is never dried between the dissolution of the cellulose and the comminution of the suspended cellulose fibers.

2. The method as claimed in claim 1, wherein the cellulosic material always has a moisture content of at least 50 %, preferably of at least 100 %, and more preferably of at least 150 %.

3. The method as claimed in claims 1 or 2, wherein the fibers are comminuted while being suspended.

4. The method as claimed in claim 3, wherein the fibers are comminuted to a length within the range between 100 µm and 600 µm while being suspended.

5. The method as claimed in any of the preceding claims, wherein, after suspending, a comminution, preferably wet grinding to a particle size of 1 to 5 µm, is performed.

6. The method as claimed in claim 1, wherein the suspension is circulated during wet grinding.

7. The method as claimed in claim 1, wherein, after the comminution, the fibers are classified in a wet classifier.

8. The method as claimed in claim 1, wherein the comminutions are carried out with a cellulose content between 0.1 and 5.0 % by weight in the suspension.

9. The method as claimed in claim 1, wherein additives are added that remain on or in the cellulosic particle.

10. The method as claimed in claim 1, wherein, prior to precipitating, 1 to 200 % by weight of additives, related to the cellulose quantity, are added to the cellulose solution, selected from the group comprising pigments, titanium oxides, particularly substoichiometric titanium dioxide, barium sulfate, ion exchangers, polyethylene, polypropylene, polyester, activated carbon, superabsorbent polymers, and flame retardants.

11. A suspension, containing 0.01 to 20 % by weight, preferably 0.1 to 10 % by weight, of cellulosic particles prepared according to a method as claimed in claim 1, **characterized in that** the cellulosic particles were never dried during their preparation, have a particle size from 1 to 5 µm, and, during drying from the mother suspension, form a film that is noticeably homogeneous when viewed with the naked eye or in an electron microscope.

12. The suspension as claimed in claim 11, wherein the cellulosic particles contained in the suspension contain 1 to 200 % by weight, related to the cellulose quantity, of incorporated additives selected from the group comprising pigments, titanium oxides, particularly substoichiometric titanium dioxide, barium sulfate, ion exchangers, polyethylene, polypropylene, polyester, activated carbon, superabsorbent polymers, and flame retardants.

13. Cellulosic particles prepared according to a method as claimed in claim 1, having a water content of 80 to 99.9 % by weight, **characterized in that** they were never dried during their preparation, have a particle size of 1 to 5 µm, and, during drying from the mother suspension, form a film that is noticeably homogeneous when viewed with the naked eye or in an electron microscope.

14. The particles as claimed in claim 14, wherein the particles contain 1 to 200 % by weight, related to the cellulose quantity, of incorporated additives selected from the group comprising pigments, titanium oxides, particularly substoichiometric titanium dioxide, barium sulfate, ion exchangers, polyethylene, polypropylene, polyester, activated carbon, superabsorbent polymers, and flame retardants.

## Revendications

1. Procédé de fabrication d'une suspension de particules cellulosiques par dissolution de cellulose pour obtenir une solution cellulosique à filer, par extrusion de la solution cellulosique, par précipitation de la cellulose, les câbles de fibre de cellulose étant conservés, par coupe des câbles de fibre de cellulose précipités à une longueur de fibres discontinues de 2 à 60 mm, par mise en suspension des fibres de cellulose coupées et par broyage des fibres de cellulose en suspension, **caractérisé en ce que** le matériau cellulosique n'est jamais séché entre la dissolution de la cellulose et le broyage des fibres de cellulose en suspension.

2. Procédé selon la revendication 1, le matériau cellulosique présentant toujours une humidité d'au moins 50 %, de préférence d'au moins 100 % ou mieux encore d'au moins 150 %.

3. Procédé selon la revendication 1 ou 2, les fibres étant broyées simultanément pendant la mise suspension.

4. Procédé selon la revendication 3, les fibres étant broyées simultanément pendant la mise en suspension à une longueur comprise entre 100 µm et 600 µm.

5. Procédé selon l'une des revendications précédentes, un broyage ayant lieu après la mise en suspension, de préférence une mouture humide à une taille de particules de 1 à 5 µm.

6. Procédé selon la revendication 1, la suspension circulant dans le circuit pendant la mouture humide.

7. Procédé selon la revendication 1, les fibres étant classées dans un classificateur par voie humide après le broyage.

8. Procédé selon la revendication 1, les broyages présentant une teneur en cellulose comprise entre 0,1 et 5,0 % en masse étant réalisés dans la suspension.

9. Procédé selon la revendication 1 lors duquel sont ajoutés des additifs qui restent sur ou dans les particules cellulosiques.

10. Procédé selon la revendication 1 dans lequel des additifs à hauteur d'1 à 200 % en masse, rapportés à la quantité de cellulose, choisis dans le groupe comprenant les pigments, les oxydes de titane, notamment les oxydes de titane sous-stoechiométriques, le sulfate de baryum, les échangeurs d'ions, le polyéthylène, le polypropylène, le polyester, le charbon actif, les polymères superabsorbants et les retardateurs de flamme, sont ajoutés à la solution de cellulose avant la précipitation.

11. Suspension contenant 0,01 à 20 % en masse, de préférence 0,1 à 10 % en masse, de particules cellulosiques fabriquées conformément à un procédé selon la revendication 1, **caractérisée en ce que** les particules cellulosiques n'ont jamais été séchées pendant leur fabrication, présentent une taille de particules de 1 à 5 µm et forment pendant le séchage de la suspension mère, un film dont l'homogénéité est visible à l'oeil nu ou au microscope électronique.

12. Suspension selon la revendication 11, les particules cellulosiques contenues dans la suspension contenant des additifs incorporés à hauteur d'1 à 200 % en masse, rapportés à la quantité de cellulose, choisis dans le groupe comprenant les pigments, les oxydes de titane, notamment les oxydes de titane sous-stoechiométriques, le sulfate de baryum, les échangeurs d'ions, le polyéthylène, le polypropylène, le polyester, le charbon actif, les polymères superabsorbants et les retardateurs de flamme.

13. Particules cellulosiques fabriquées conformément à un procédé selon la revendication 1, avec une teneur en eau de 80 à 99,9 % en masse, **caractérisées en ce qu'**elles n'ont jamais été séchées pendant leur fabrication, présentent une taille de particules de 1 à 5 µm et forment pendant le séchage de la suspension mère, un film dont l'homogénéité est visible à l'oeil nu ou au microscope électronique.

14. Particules selon la revendication 14, les particules contenant des additifs incorporés à hauteur d'1 à 200 % en masse, rapportés à la quantité de cellulose, choisis dans le groupe comprenant les pigments, les oxydes de titane, notamment les oxydes de titane sous-stoechiométriques, le sulfate de baryum, les échangeurs d'ions, le polyéthylène, le polypropylène, le polyester, le charbon actif, les polymères superabsorbants et les retardateurs de flamme.
